# EUROPÄISCHE PATENTSCHRIFT

(11) **EP 0 874 995 B1**
(45) Veröffentlichungstag und Bekanntmachung des Hinweises auf die Patenterteilung: **04.09.2002**
(21) Anmeldenummer: 97919362.0
(22) Anmeldetag: 16.04.1997
(51) Int. Cl.: G01P 3/481

(54) **SCHALTUNGSANORDNUNG UND VORRICHTUNG ZUR ERFASSUNG DES DREHVERHALTENS EINES RADES**
CIRCUIT AND DEVICE FOR SENSING THE ROTARY BEHAVIOUR OF A WHEEL
CIRCUIT ET DISPOSITIF POUR LA MESURE DU COMPORTEMENT EN ROTATION D'UNE ROUE

(30) Priorität: 03.05.1996 DE 19617680
(43) Veröffentlichungstag der Anmeldung: 04.11.1998
(73) Patentinhaber: Continental Teves AG & Co. oHG, 60488 Frankfurt (DE)
(72) Erfinder: LOHBERG, Peter, D-61381 Friedrichsdorf (DE); FEY, Wolfgang, D-65527 Niedernhausen (DE); ZYDEK, Michael, D-35428 Langgöns (DE); GOOSSENS, André, F., L., B-2840 Rumst (BE)
(86) Internationale Anmeldenummer: EP9701884
(87) Internationale Veröffentlichungsnummer: WO97042508

(56) Entgegenhaltungen:
- EP-A- 0 363 001
- WO-A-95/17680
- DE-C- 3 708 375
- DE-U- 9 418 469
- GB-A- 557 948
- US-A- 4 965 517
- US-A- 5 486 759

## Beschreibung

Die Erfindung bezieht sich auf eine Schaltungsanordnung zur Erfassung des Drehverhaltens eines Rades als Eingangsgröße eines Kraftfahrzeug-Regelungssystems, mit einem aktiven Radsensor, der aus einem Meßwertgeber in Form eines mit dem Rad umlaufenden Encoders und aus einem ortsfesten Meßwertaufnehmer besteht, der ein aktives, ein Sensorelement mit Permanentmagneten sowie eine elektronische Signalverarbeitungsschaltung enthaltendes Meßelement aufweist und über ein Anschlußkabel mit einer außerhalb des Meßwertaufnehmers angeordneten Auswerteschaltung verbunden ist. Eine Vorrichtung mit einer Schaltungsanordnung dieser Art, bei der der Meßwertaufnehmer an einem aus elektrisch leitendem Material gefertigten Trägerkörper befestigt ist, gehört ebenfalls zur Erfindung.

Derartige Schaltungsanordnungen und Vorrichtungen zur Erfassung der Drehzahl eines Fahrzeugrades sind bereits in vielfältigen Ausführungsformen bekannt und auf dem Markt. Diese Radsensoren oder Sensorsysteme, die aus einem die Drehbewegung ausführenden Encoder oder Zahnrad und aus einem Meßwertaufnehmer bestehen, lassen sich grundsätzlich als passive oder aktive Systeme oder Sensoren ausbilden. Bisher wurden aus technologischen und preislichen Gründen induktive Sensoren, also passive Meßsysteme, als Radsensoren für Kraftfahrzeug-Regelungssysteme bevorzugt. Es ist zu erwarten, daß die Bedeutung von aktiven Sensoren zunimmt.

Ein aktiver Drehzahlsensor ist bereits aus der WO 95/17680 bekannt. Nach dieser Schrift besteht die Meßvorrichtung grundsätzlich aus einem mit dem Rad rotierenden Encoder, aus einem magnetoresistiven Sensorelement mit einem als Vorspannmagnet dienenden Permanentmagneten und aus einer Signalverarbeitungsschaltung, die in einem integrierten Schaltkreis (IC) untergebracht ist. Über ein 2-adriges Anschlußkabel werden die Ausgangssignale des aktiven Sensors zur zentralen Auswerteschaltung geleitet.

Eine Schaltungsanordnung zur Auswertung des Ausgangssignals eines aktiven Sensors ist in der DE 44 34 180 A1 dargestellt. Das Ausgangssignal des Sensors ist ein binäres Stromsignal, das mit Hilfe einer Stromspiegelschaltung ausgewertet wird. Der Sensor ist an die Fahrzeugbatterie angeschlossen und wird aus der Fahrzeugbatterie mit Energie versorgt. Auch bei dieser Schaltungsanordnung ist jeder einzelne Radsensor mit dem Regler bzw. der gemeinsamen Auswerteschaltung über ein zumindest 2-adriges Kabel verbunden.

Bei den aktiven Sensoren der hier in Rede stehenden Art erfolgt die Abtastung der Meßwertgeber, Impulsgeber oder Encoder, die sich mit dem Rad drehen, über magnetische, insbesondere permanentmagnetische Felder. Bekannte Encoder enthalten permanentmagnetische Bereiche oder Areale, die in Drehrichtung mit wechselnder Polarität aufeinanderfolgen. Grundsätzlich ist es auch möglich, die Drehbewegung des Meßwertgebers über Licht, Hochfrequenz oder über elektrische Felder, die durch die Drehbewegung moduliert werden, abzutasten.

Bekannte aktive Sensoren liefern als Ausgangssignal einen eingeprägten Strom, dessen Stromstärke im Hig/Low-Takt des Meßwert- bzw. Impulsgebers zwischen einem hohen Wert und einem geringen Wert wechselt. Der Begriff eingeprägter Strom bedeutet hier, daß die hohen und die geringen Werte jeweils ihre Nominalwerte beibehalten, und zwar unabhängig von der Höhe der an den aktiven Sensor angelegten Betriebsspannung, z.B. der Batteriespannung, die sich bekanntlich in einem Kraftfahrzeug in relativ weiten Grenzen ändert.

Schaltungskonzepte zur Realisierung der erforderlichen Signalstromeigenschaften derartiger aktiver Sektoren sind bekannt. Das Sensorelement nach der vorgenannten WO 95/17680 besteht nach einem Ausführungsbeispiel aus einem permanentmagnetisch vorgespannten, magnetoresistiven Brückenelement, das mit einer komplexen Signalverarbeitungsschaltung zu einer Baueinheit zusammengefaßt ist. Das Element ist ein Zweipol, dessen Stromverbrauch zwischen zwei Festwerten über ein ferromagnetisches Zahnrad umgesteuert werden kann.

Zum Anschluß jedes einzelnen Radsensors an die zentrale Auswertungsschaltung wurde bisher ein 2-adriges Kabel aus Kupferlitze verwendet. Zur Verbindung der Litze mit dem Kabelbaum ist folglich ein 2-poliger Stecker pro Sensor erforderlich. Die Kupferlitzen haben einen relativ großen Querschnitt, weil das Kabel im Fahrzeug relativ großen Zugkräften widerstehen muß. Der Außendurchmesser des Kabels beträgt beispielsweise 5 - 6 mm. Das Kabel erhält dadurch eine gewisse Steifigkeit, die den sogenannten Peitscheneffekt verhindert, den das peitschenartige Schlagen des Kabels als Folge von Vibrationen des Rades verursacht. Da die Meßwertaufnehmer solcher aktiver Sensoren verhältnismäßig klein und zierlich gestaltet werden können, was insbesondere bei Verwendung als Radlagersensoren von Vorteil ist, besteht der Wunsch, entsprechend dünnere Kabel zu verwenden, die dennoch den vorgenannten mechanischen Anforderungen genügen müßten.

Der Erfindung liegt nun die allgemeine Aufgabe zugrunde, den Herstellungsaufwand für aktive Sensoren dieser Art ohne Einschränkung der elektrischen Leistungsfähigkeit und mechanischen Belastbarkeit zu reduzieren, und zwar den Gesamtaufwand des komplett konfektionierten Sensors, einschließlich Verkabelung, Stecker und Montage.

Es hat sich gezeigt, daß diese Aufgabe durch die im Anspruch 1 beschriebene Schaltungsanordnung bzw. durch die im Anspruch 3 beschriebene Vorrichtung gelöst werden kann. Die Besonderheit der erfindungsgemäßen Schaltungsanordnung besteht darin, daß das Meßelement einen aktiven Zweipol darstellt, der als Ausgangs- und Meßsignal einen eingeprägten Strom liefert, daß das Anschlußkabel ein 1-adriges Kabel ist und daß der Meßwertaufnehmer über das Anschlußkabel und über einen Masseanschluß des Fahrzeugs an die Auswerteschaltung angeschlossen ist. Die Auswerteschaltung ist zweckmäßigerweise über den Potentialbezugspunkt des Regelungssystems mit Masse verbunden.

Bei der erfindungsgemäßen Vorrichtung, bei der der Meßwertaufnehmer an einem aus elektrisch leitendem Material bestehenden Trägerkörper befestigt ist, ist eine elektrisch isolierte Anschlußleitung vorhanden, die von einem Pol des als Zweipol ausgebildeten Meßelementes zu dem Anschlußkabel des Meßwertgebers führt, wobei das Anschlußkabel 1-adrig ist und wobei der zweite Anschluß des Zweipols galvanisch mit dem Trägerkörper des Meßwertgebers und über diesen mit dem Masseanschluß des Fahrzeugs verbunden ist.

Einige besonders vorteilhafte Ausführungsarten der Schaltungsanordnung und der Meßvorrichtung sind in den abhängigen Ansprüchen beschrieben.

Mit der erfindungsgemäßen Schaltungsanordnung und der erfindungsgemäßen Vorrichtung wird also eine Reduzierung des Kabelaufwandes - nämlich des Herstellungsaufwandes für das Kabel und für den Stecker - und des Montageaufwandes ermöglicht, indem anstelle des bisher als notwendig angesehenen 2-adrigen Anschlusses auf einen 1-adrigen übergegangen wird. Dies bedeutet eine beachtliche Kostenverringerung, weil der Kabel- und Steckeraufwand gegenwärtig den überwiegenden Teil des Gesamtaufwandes eines komplett konfektionierten aktiven Radsensors ausmacht.

Die Beschränkung auf ein 1-adriges Verbindungskabel zwischen den einzelnen Radsensoren und der zentralen Auswerteschaltung wird erfindungsgemäß durch das Arbeiten mit eingeprägten Signalströmen als Informationsträger zwischen dem Meßelement und der Auswerteschaltung ermöglicht. Ein Pol des Meßelementes ist über das 1-adrige Kabel mit der Auswerteschaltung verbunden. Der andere Pol liegt auf Masse, die Auswerteschaltung auf dem Bezugspotential (GND) des Regelungssystems.

Infolge des Arbeitens mit eingeprägten Signalströmen bleibt ein Potentialversatz zwischen dem Masseanschluß des Sensors und dem Bezugspotential GND ohne Auswirkung auf das Sensorsignal; die Signalübertragung ist unempfindlich gegenüber Störungen. Die bekanntlich für Spannungen bzw. Störquellen unterschiedlichster Art in einem Metallkörper, wie in einem Fahrzeugchassis, hervorgerufenen Ring- oder Ausgleichsströme, Potentialdifferenzen usw., die bisher durch die zweite Ader des Anschlußkabels eines Sensors überbrückt wurden, haben bei der erfindungsgemäßen Schaltungsanordnung und der entsprechenden Meßvorrichtung keinen Einfluß auf das zur Auswerteschaltung übertragene Meßsignal.

Erfindungsgemäß wird also als Sensor ein aktiver Zweipol verwendet, der eingeprägte Ströme unterschiedlicher Höhe im Übertragungsweg hervorruft. Das Unterscheiden zwischen zwei Signalstrom-Level genügt zum Übertragen bzw. Hervorrufen eines Wechselsignals, dessen Frequenz das Raddrehverhalten wiedergibt.

Weitere Merkmale, Vorteile und Anwendungsmöglichkeiten der Erfindung gehen aus der folgenden Darstellung weiterer Details anhand der beigefügten Abbildungen hervor.

Es zeigen:
- Fig. 1: in schematisch vereinfachter Darstellungsweise das Prinzip eines Ausführungsbeispiels der Schaltungsanordnung nach der Erfindung,
- Fig. 2: in schematisch vereinfachter Darstellung eine Meßvorrichtung nach der Erfindung und
- Fig. 3: in gleicher Darstellungsweise eine Meßvorrichtung gemäß einem weiteren Ausführungsbeispielder Erfindung.

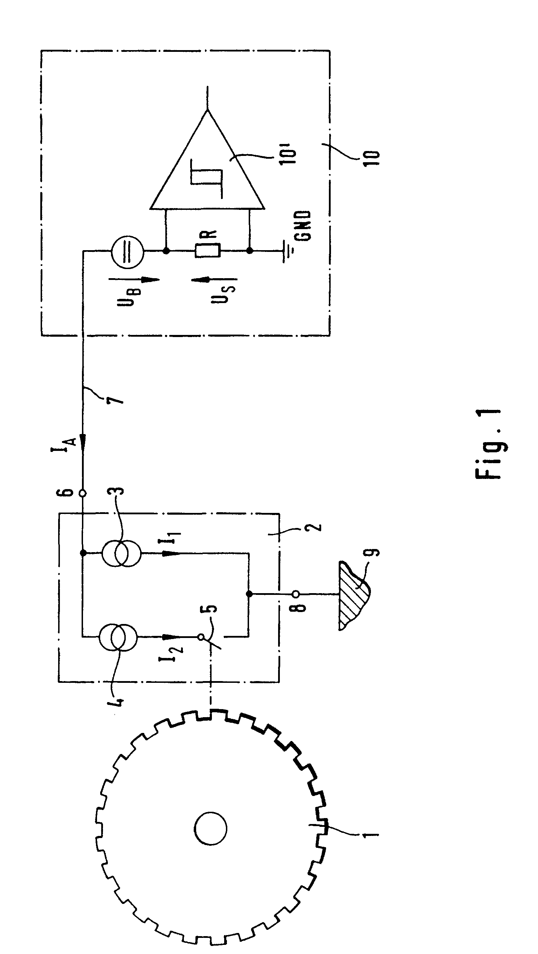

Das Prinzip und die Funktionsweise der erfindungsgemäßen Schaltungsanordnungen und Meßvorrichtungen veranschaulicht Fig. 1. Dargestellt ist ein Meßwertgeber 1 in Form einer Zahnscheibe; es könnte auch ein Encoder mit permanentmagnetischen Arealen, die anstelle der Zähne die Meßsignalpulse auslösen, oder eine andere bekannte Anordnung verwendet werden.

Als Meßwertaufnehmer dient nach Fig. 1 ein symbolisch dargestelltes Meßelement 2, das sich vorzugsweise aus einem Sensorelement und einer auf einem IC untergebrachten Signalverarbeitungsschaltung zusammensetzt. Als Sensorelement ist beispielsweise eine magnetoresistive Brückenschaltung mit einem Vorspann-Permanentmagneten geeignet. Dieses Sensorelement sitzt möglichst nahe an der Peripherie der Zahnscheibe oder des Encoders 1. Ein solches Sensorelement und die zugehörige Signalverarbeitungsschaltung werden zu dem Meßelement 2 baulich vereinigt, das dann entsprechend seiner Funktion und Wirkungsweise durch das dargestellte Ersatzbild, nämlich durch zwei Stromquellen 3, 4 und einen Schalter 5 symbolisiert bzw. symbolisch dargestellt wird.

Die beiden Stromquellen 3 und 4, die die eingeprägten Ströme I₁ und I₂ hervorrufen, sind parallel geschaltet. Je nach Stellung des Schalters 5 beträgt der Gesamtstrom, den das Sensor- oder Meßelement 2 abgibt, entweder I₁ oder I₁ + I₂. Folglich besteht das Ausgangssignal des Meßelementes 2 aus einem Strom I_{A} dessen Wert zwischen I₁ und I₁+ I₂ wechselt.

Der Meßwertaufnehmer 2 gemäß Fig. 1 ist also ein aktives Sensorelement, das sich aus einem Sensorelement (z.B. eine permanentmagnetisch vorgespannte, magnetoresistive Brückenschaltung) und einer Signalverarbeitungsschaltung zusammensetzt. Das Ersatzbild ist eine Schaltung mit zwei parallelen Stromquellen, von denen nur eine abgeschaltet werden kann. Das aktive Sensorelement ist ein Zweipol.

Nach der erfindungsgemäßen Schaltungsanordnung ist ein Anschluß 6 des Zweipols (2) über ein 1-adriges Kabel 7 mit einer Auswerteschaltung 10, die Bestandteil des elektronischen Reglers eines Kraftfahrzeug-Regelungssysems (ABS, ASR, ASMS etc.) sein kann, verbunden. Der zweite Pol 8 des Zweipols (2) ist unmittelbar mit Masse verbunden, z.B. durch mechanische und galvanische Kopplung mit dem Metallkörper 9 eines Kraftfahrzeuges. An die "Qualität" der galvanischen Verbindung sind keine allzu hohen Foderungen zu stellen, weil, wie bereits ausgeführt, ein Potentialversatz zwischen dem Anschlußpunkt oder Pol 8 des Zweipols oder aktiven Sensors und dem Potentialbezugspunkt GND der Auswerteschaltung 10 ohne Auswirkung bleibt. Dabei sind weder statische oder Gleichstrom-Potentialdifferenzen, noch die durch sog. Ringströme über Masseschleifen und bestimmte Verbraucher hervorgerufenen Potentialänderungen von Bedeutung, weil sich diese nicht auf die Höhe des eingeprägten Stromes I₁ oder I₁ + I₂ auswirken.

In Fig. 1 ist als Bestandteil der Auswerteschaltung 8 eine Spannungsquelle mit der Versorgungsspannung oder Batteriespannung U_{B} und eine Kippschaltung oder Signalverstärkerschaltung 10', deren Eingänge durch einen ohmschen Widerstand R überbrückt sind, symbolisch dargestellt. Die Batterie mit der Spannung U_{B} ruft einen über das 1-adrige Kabel 7, über das Meßelement 2, über Masse 9, über den Potentialbezugspunkt GND und über den Eingangswiderstand R fließenden Strom I_{A} hervor. U_{S} symbolisiert die Signalspannung am Eingang der Schaltung 10', die beispielsweise die Eingangsschaltung eines ABS-Reglers sein kann.

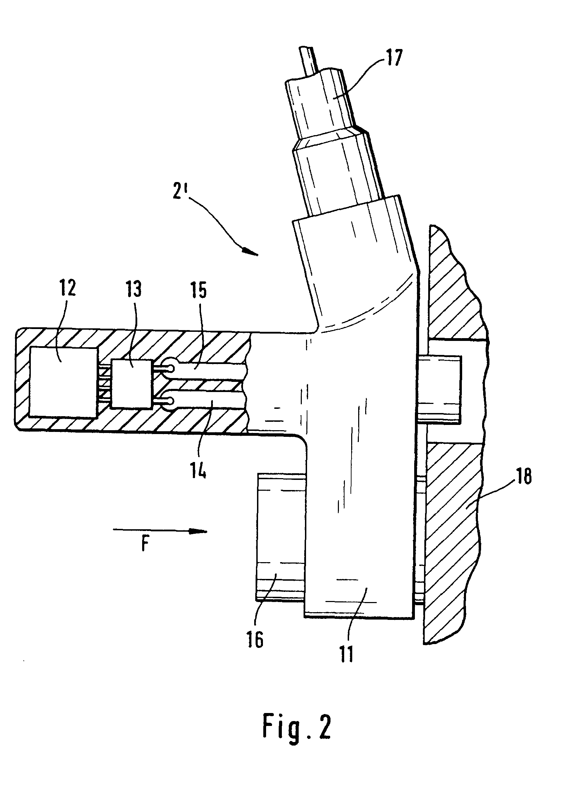

Ein Ausführungsbeispiel eines aktiven Sensors nach der Erfindung, nämlich eines Meßwertaufnehmers 2' zur Raddrehzahlerfassung an einem Kraftfahrzeug, zeigt Fig. 2. In einem Kunststoffkörper sind ein aus dem eigentlichen Sensorelement 12 und der zugehörigen elektronischen Signalverarbeitungsschaltung 13 bestehendes aktives Meßelement (12 + 13) und die elektrischen Anschlüsse 14,15, ein Bauteil 16 zur Befestigung des Meßwertaufnehmers 2' an einem Trägerkörper 18 und ein 1-adriges Kabel 17 bzw. der Anschluß dieses Kabels 17 an den aktiven Sensor (12+13) eingegossen. Das zur Befestigung des Meßwertaufnehmers 2' dienende Bauteil 16 besteht im vorliegenden Ausführungsbeispiel aus einem starkwandigen Stück Messingrohr. Zur Befestigung des Meßwertaufnehmers 2' an dem aus elektrisch leitendem Material bestehenden Trägerkörper 18 ist eine in Fig. 2 nicht dargestellte Schraubverbindung geeignet, die den Meßwertaufnehmer 2' mit einer Kraft von z.B. 2000N an den Trägerkörper 18 anpreßt. Das Bauteil 16 ist in dem dargestellten Ausführungsbeispiel mit dem Anschlußdraht 14 des aktiven Meßelementes bzw. der Signalverarbeitungsschaltung oder des IC's 13 galvanisch verbunden. Der Anschluß 15 führt über das Kabel 17 zu dem Eingang eines ABS-Reglers. Es genügt, lediglich die Anschlußleitung 15 isoliert zu führen, weil der zweite Anschluß 14 des aktiven Meßelementes auf Masse liegt. In den Meßwertaufnehmer 2' eindringendes Wasser kann die elektrische Funktion dieses aktiven Sensors nicht beeinträchtigen, da der Kontakt 14 elektrisch auf dem Massepotential des Kraftfahrzeuges liegt, wenn die Verbindung zum Anschluß 15 durch vollständige Umspritzung mit Kunststoff vor Feuchtigkeit gesichert ist.

Ein Meßwertaufnehmer der erfindungsgemäßen Art kann zweckmäßigerweise auch in Form eines sog. Clip-On-Sensors ausgebildet werden. Dies ist eine spezielle Form einer Schnappverbindung oder Steckverbindung. Derartige Sensoren sind bekannt und daher hier nicht dargestellt.Solche Sensoren sind z.B. für die Abtastung von magnetisierten Lagerdichtringen, die in diesem Fall als Encoder dienen, geeignet. Eine Haltefeder der Steck- bzw. Einrastvorrichtung drückt dabei fest in eine entsprechende Kerbe am Körper des Meßwertaufnehmers. Die Einrastvorrichtung ist elastisch ausgebildet und aus Metall. Sie ist stationär am Radlager befestigt. Wird nun die Kerbe am Körper des Meßwertaufnehmers ebenfalls metallisch ausgeführt und mit dem zur Masse führenden Anschlußdraht (z.B. dem Anschlußdraht 14 in der Ausführungsform nach Fig. 2) galvanisch verbunden, entsteht nach dem Einrasten des Sensorkörpers ein sicherer galvanischer Kontakt von dem Meßelement über den Sensorkörper und über die Haltefeder der Einrastvorrichtung zum Radlager und damit zum Fahrzeugkörper. Der andere Pol des Meßelementes wird in der zuvor erläuterten Weise über das 1-adrige Kabel zur Auswerteschaltung 10 (Fig. 1) geführt.

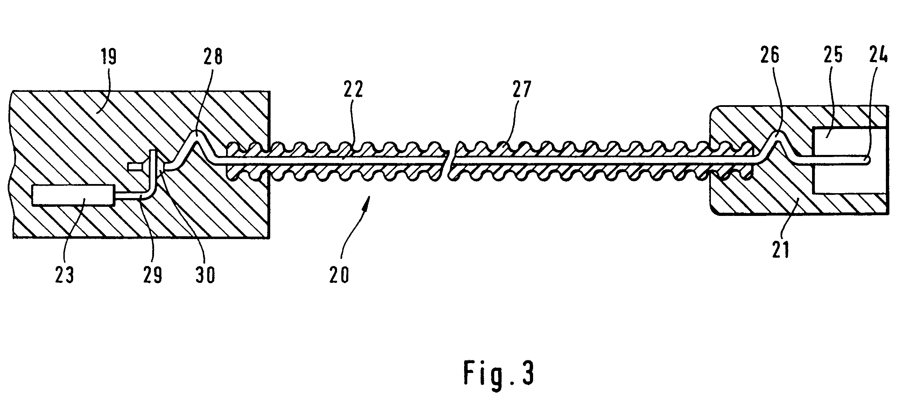

Fig. 3 zeigt in schematischer Darstellung den prinzipiellen Aufbau einer Meßvorrichtung mit einem Stahldraht als Anschlußkabel.

Fig. 3, die einen Meßwertaufnehmer 19, ein aus Stahl bestehendes Anschlußkabel 20 und einen einpoligen Stecker 21 wiedergibt, bezieht sich auf eine besonders preisgünstige und mechanisch stabile Ausführungsform der Erfindung. In diesem Beispiel besitzt das 1-adrige Anschlußkabel 20 eine Stahldraht-Seele 22 oder Stahldraht-Ader; bisher hielt man die Verwendung eines Kabels mit Kupferlitze für erforderlich. In diesem Beispiel besteht die Ader 22 des Kabels 20 aus vernickeltem Federstahldraht mit einem Durchmesser von etwa 0,8 - 1 mm. Das Meßelement 23 dieses Meßwertaufnehmers 19 ist, wie in dem Beispiel nach Fig. 2, in Kunststoff eingebettet. Ein Ende der Federstahl-Ader 22 wird gleichzeitig als Stecker-Pin 24 verwendet, der sich in einer Aufnahmeöffnung 25 des an dieses Ende des Kabels angespritzten Kupplungs- oder Steckerteils 21 befindet. Die Stahlader ist in der Kunststoffmasse des Steckers durch schleifenartige Umlenkung 26 fixiert. Die Stahlader 22 ist zur Isolation mit einem harten Kunststoff umspritzt.

Auf der Sensorseite ist die Stahlader 22 ebenfalls durch eine schleifenartige Umlenkung 28 arretiert und mit dem Meßelement 23 über einen Anschlußbügel 29 verbunden, in dem ein Ende der Stahlader 22 durch eine Löt- oder Schweißstelle 30 fixiert ist. Stahlader 22 und Anschlußbügel 29 sind durch diese Löt- und Schweißstelle galvanisch verbunden.

Da erfindungsgemäß das Meßsignal mit Hilfe eingeprägter Signalströme übertragen wird, genügt die elektrische Leitfähigkeit von Stahldrahtadern zur Signalübertragung. Es ist möglich, Federstahldrähte mit relativ dünnem Leitungsquerschnitt und hoher Zugfestigkeit zu verwenden, bei denen die eingangs genannten Peitscheneffekte nicht auftreten.

Die erfindungsgemäße Schaltungsanordnung und die beschriebenen Meßvorrichtungen zeichnen sich folglich durch besonders einfachen Aufbau, hohe Stabilität und einfache Montage aus. Diese Vorteile werden ohne Einbuße an den elektrischen Eigenschaften erzielt.

## Patentansprüche

1. Schaltungsanordnung zur Erfassung des Drehverhaltens eines Rades als Eingangsgröße eines Kraftfahrzeug-Regelungssystems, mit einem aktiven Radsensor (1,2,10), der aus einem Meßwertgeber in Form eines mit dem Rad umlaufenden Encoders (1) und aus einem ortsfesten Meßwertaufnehmer (2) besteht, der ein aktives, ein Sensorelement (5) mit Permanentmagneten und eine elektronische Signalverarbeitungsschaltung enthaltendes Meßelement (2) aufweist und über ein Anschlußkabel (7) mit einer außerhalb des Meßwertaufnehmers angeordneten Auswerteschaltung (10) verbunden ist, **dadurch gekennzeichnet, daß** das Meßelement(2,12+13) einen aktiven Zweipol darstellt, der als Ausgangs- und Meßsignal einen eingeprägten Strom (I_{A}) liefert, daß das Anschlußkabel (7,17,27) als 1-adriges Kabel ausgebildet ist und daß der Meßwertaufnehmer (2) über das Anschlußkabel und über einen Masseanschluß (9) des Fahrzeugs an die Auswerteschaltung (10) angeschlossen ist.

2. Schaltungsanordnung nach Anspruch 1, **dadurch gekennzeichnet, daß** als 1-adriges Kabel ein mechanisch stabiles Stahlkabel (27) vorgesehen ist.

3. Vorrichtung zur Erfassung des Drehverhaltens eines Rades als Eingangsgröße eines Kraftfahrzeug-Regelungssystems, mit einem aktiven Radsensor (1,2,10), der aus einem Meßwertgeber in Form eines mit dem Rad umlaufenden Encoders (1) und aus einem ortsfesten Meßwertaufnehmer (2,2',19) besteht, der ein aktives Meßelement (12,13) aufweist, der an einem aus elektrisch leitendem Material gefertigten Trägerkörper (18) befestigt ist und über ein Anschlußkabel mit einer Auswerteschaltung verbunden ist, **dadurch gekennzeichnet, daß** der Meßwertaufnehmer (2',19) in einem Gehäuse ein als Zweipol ausgebildetes, einen eingeprägten Strom (I_{A}) lieferndes Meßelement (12+13,23) und eine elektrisch isoliert geführte Anschlußleitung (15) enthält, die von einem Pol des Zweipols (12+13,23) zu dem Anschlußkabel (17,20) des Meßwertaufnehmers (2',19) führt, daß das Anschlußkabel (17,20) 1-adrig ist und daß der zweite Anschluß (14) des Zweipols (12+13,23) galvanisch mit dem Trägerkörper (18) des Meßwertaufnehmers (2',19) und über diesen mit einen Masseanschluß (9) des Kraftfahrzeugs verbunden ist.

4. Vorrichtung nach Anspruch 3, **dadurch gekennzeichnet, daß** der Meßwertaufnehmer mit einem Befestigungselement (16) versehen ist, das an dem Trägerkörper (18) angeschraubt ist, wobei das Befestigungselement (16) mit dem zweiten Anschluß (14) des Zweipols (12+13) und mit dem Trägerkörper (18) galvanisch verbunden ist.

5. Vorrichtung nach Anspruch 3, **dadurch gekennzeichnet, daß** der Meßwertaufnehmer durch eine Schnappverbindung (eine Steckverbindung oder Clip-On-Verbindung) an dem Trägerkörper (18) befestigt ist und daß eine galvanische Verbindung zwischen dem Masseanschluß des Meßelementes (12+13) über das Gehäuse oder ein Gehäuseteil des Meßwertaufnehmers (19) und über Elemente der Schnappverbindung zu dem Trägerkörper (18) besteht.

## Claims

1. Circuit arrangement for determining the rotational behavior of a wheel as an input quantity of an automotive vehicle control system, including an active wheel sensor (1, 2, 10) that is composed of a measuring data emitter in the form of an encoder (1) rotating with the wheel and a stationary pick-up for measuring data (2) which has an active measuring element (2) comprised of a sensor element (5) with permanent magnets and an electronic signal processing circuit and, by way of a connecting cable (7), is connected to an evaluating circuit (10) that is arranged outside the pick-up for measuring data,
**characterized in that** the measuring element (2, 12+13) is an active two-terminal network which delivers a load-independent current (I_{A}) as an output and measuring signal, **in that** the connecting cable (7, 17, 27) is configured as a single-core cable, and **in that** the pick-up for measuring data (2) is connected to the evaluating circuit (10) by way of the connecting cable and a ground connection (9) of the vehicle.

2. Circuit arrangement as claimed in claim 1,
**characterized in that** a mechanically stable steel cable (27) is provided as a single-core cable.

3. Device for determining the rotational behavior of a wheel as an input quantity of an automotive vehicle control system, including an active wheel sensor (1, 2, 10) that is composed of a measuring data emitter in the form of an encoder (1) rotating with the wheel and a stationary pick-up for measuring data (2, 2',19) which includes an active measuring element (12, 13) that is attached to a carrier member (18) made from an electrically conductive material and is connected to an evaluating circuit by way of a connecting cable,
**characterized in that** the pick-up for measuring data (2',19) accommodates in a housing a measuring element (12+13, 23) which is designed as a two-terminal network and delivers a load-independent current (I_{A}), and a connecting line (15) which is electrically insulated and leads from a terminal of the two-terminal network (12+13, 23) to the connecting cable (17, 20) of the pick-up for measuring data (2', 19), **in that** the connecting cable (17, 20) is configured as a single-core cable, and **in that** the second connection (14) of the two-terminal network (12+13, 23) is galvanically connected to the carrier member (18) of the pick-up for measuring data (2',19) and by way of said to a ground connection (9) of the automotive vehicle.

4. Device as claimed in claim 3,
**characterized in that** the pick-up for measuring data includes an attachment element (16) which is screwed to the carrier member (18), with the said attachment element (16) being galvanically connected to the second connection (14) of the two-terminal network (12+13, 23) and to the carrier member (18).

5. Device as claimed in claim 3,
**characterized in that** the pick-up for measuring data is attached to the carrier member (18) by way of a spring catch connection (a plug coupling or clip-on connection), and **in that** there is a galvanic connection between the ground connection of the measuring element (12+13) and the carrier member (18) by way of the housing or a housing part of the pick-up for measuring data (19) and by way of elements of the spring catch connection.

## Revendications

1. Agencement de circuit permettant de relever le comportement en rotation d'une roue constituant une grandeur d'entrée d'un système de régulation de véhicule automobile, comprenant un capteur de roue (1, 2, 10) actif qui est constitué d'un générateur de valeur de mesure, se présentant sous forme d'un codeur (1) tournant avec la roue, et d'un récepteur de valeur de mesure (2) fixe qui comporte un élément de mesure (2) actif contenant un élément détecteur (5) à aimant permanent et un circuit électronique de traitement de signal et est relié par un câble de raccordement (7) à un circuit d'analyse (10) disposé en dehors du récepteur de valeur de mesure, **caractérisé en ce que** l'élément de mesure (2, 12 + 13) constitue un dipôle actif qui fournit le courant (I_{A}) indépendant de la charge en tant que signal de sortie et signal de mesure, **en ce que** le câble de raccordement (7, 17, 27) est réalisé sous forme d'un câble monoconducteur et **en ce que** le récepteur de valeur de mesure (2) est raccordé au circuit d'analyse (10) par l'intermédiaire du câble de raccordement et par l'intermédiaire d'une borne de masse (9) du véhicule.

2. Agencement de circuit suivant la revendication 1, **caractérisé en ce que**, comme câble monoconducteur, il est prévu un câble en acier (27) stable sur le plan mécanique.

3. Dispositif permettant de relever le comportement en rotation d'une roue constituant une grandeur d'entrée d'un système de régulation de véhicule automobile, comprenant un capteur de roue (1, 2, 10) actif qui est constitué d'un générateur de valeur de mesure, se présentant sous forme d'un codeur (1) tournant avec la roue, et d'un récepteur de valeur de mesure (2, 2', 19) fixe qui comporte un élément de mesure (12, 13) actif qui est fixé sur un corps de support (18) réalisé en une matière électriquement conductrice et est relié par un câble de raccordement (7) à un circuit d'analyse, **caractérisé en ce que** le récepteur de valeur de mesure (2', 19) contient, dans un boîtier, un élément de mesure (12 + 13, 23), réalisé sous forme d'un dipôle et délivrant un courant (I_{A}) indépendant de la charge, et une ligne de raccordement (15) qui s'étend en étant électriquement isolée et qui mène d'un pôle du dipôle (12 + 13, 23) d'un pôle du dipôle (12 + 13, 23) au câble de raccordement (17, 20) du récepteur de valeur de mesure (2', 19), **en ce que** le câble de raccordement (17, 20) est monoconducteur et **en ce que** la seconde borne (14) dudit pôle (12 + 13, 23) est reliée par des moyens de nature ohmique au corps de support (18) du récepteur de valeur de mesure (2', 19) et, par l'intermédiaire de celui-ci, à une borne de masse (9) du véhicule automobile.

4. Dispositif suivant la revendication 3, **caractérisé en ce que** le récepteur de valeur de mesure est pourvu d'un élément de fixation (16) qui est fixé par des vis au corps de support (18), l'élément de fixation (16) étant relié par des moyens de nature ohmique à la seconde borne (14) du dipôle (12 + 13) et au corps de support (18).

5. Dispositif suivant la revendication 3, **caractérisé en ce que** le récepteur de valeur de mesure est fixé au corps de support (18) au moyen d'une liaison rapide (une liaison par enfichage ou liaison éclipsable) et **en ce qu'**une liaison de nature ohmique existe entre la borne de masse de l'élément de mesure (12 + 13) par l'intermédiaire du boîtier ou d'une partie de boîtier du récepteur de valeur de mesure (19) et par l'intermédiaire d'éléments de la liaison rapide vis-à-vis du corps de support (18).
